# EUROPEAN PATENT APPLICATION

(11) **EP 2 843 321 A1**
(43) Date of publication of application: **04.03.2015**
(21) Application number: 14162853.7
(22) Date of filing: 31.03.2014
(51) Int. Cl.: F24J 2/52

(54) **Photoelectric panel assembly**

(30) Priority: 28.08.2013 US 201361870978 P
(71) Applicant: Samsung SDI Co., Ltd., Yongin-si, Gyeonggi-do (KR)
(72) Inventor: Yang, Jung-Yup, Gyeonggi-do (KR); Yoon, Seok-Joon, Gyeonggi-do (KR); No, Dong-Hun, Gyeonggi-do (KR); Kang, Yeon-Il, Gyeonggi-do (KR); Kim, Min-Gu, Gyeonggi-do (KR); Jeon, Kwang-Sik, Gyeonggi-do (KR)
(74) Representative: Walaski, Jan Filip

(57) **Abstract**

A photoelectric panel assembly comprises a photoelectric panel (10) having a front surface for receiving light, and a rear surface opposite the front surface and a support rail (210) coupled to the rear surface of the photoelectric panel (10), wherein the support rail (210) includes a base portion (211), first and second flange portions (218) on either side of the base portion (211) coupled to the rear surface of the photoelectric panel (10) and respective joining portions (215) formed between the base portion (211) and each of the flange portions (218), wherein the angle θ between the base portion (211) and each of the joining portions (215) is between 80° and 130°, wherein at least one of the corners between the base portion (211) and one of the joining portions (215) and between one of the joining portions (215) and the corresponding flange portion (218) are rounded.

## Description

The present invention relates to a photoelectric panel assembly.

Recently, development of clean energy is accelerating due to depletion of energy resources and environmental pollution. Since a sunlight generation system using a solar cell, which generates clean energy, directly converts sunlight to electricity, sunlight is expected to be a source of new energy.

A solar cell panel may have an approximately flat shape, and a frame may be adhered to a rear surface of the solar cell panel for installation. Also, the solar cell panel may be fixed on a support by using the frame.

One or more embodiments of the present invention include a photoelectric panel assembly that is conveniently manufactured and is capable of preventing a stress from being intensively applied to a photoelectric panel and preventing the photoelectric panel from being damaged, via the design of the shape of a support rail for mounting the photoelectric panel thereon.

According to the invention, there is provided a photoelectric panel assembly comprising a photoelectric panel having a front surface for receiving light, and a rear surface opposite the front surface and a support rail coupled to the rear surface of the photoelectric panel, wherein the support rail includes a base portion, first and second flange portions on either side of the base portion coupled to the rear surface of the photoelectric panel and respective joining portions formed between the base portion and each of the flange portions, wherein the angle θ between the base portion and each of the joining portions is between 80° and 130°, wherein at least one of the corner between the base portion and one of the joining portions and a corner between one of the joining portions and the corresponding flange portion are rounded. The rounded portion may have a radius of curvature R greater than o mm and less than or equal to 2.5 mm or between 4 mm and 9 mm. The ratio of the radius of curvature of the rounded portion to the length (width) of the support rail may be in the range o < R/L ≤ 2.728% or 4.364% ≤ R/L ≤ 9.819%.

Each of the joining portions may slope inwards from the base portion to the flange portions.

Each of the joining portions may slope outwards from the base portion to the flange portions.

The angle θ between the base portion and each of the joining portions may be between 95° and 105°.

Each of the joining portions may join the base portion at a right angle.

The base portion and the flange portions may be parallel to one another.

The support rail may comprise a single layer of sheet metal. The assembly may comprise a plurality of support rails extending along the length of the panel and spaced apart from one another.

The photoelectric panel may be supported by four support rails symmetrically disposed around the centre of the photoelectric panel.

The assembly may further comprise an adhesive layer between the flange portion and the rear surface of the photoelectric panel.

The assembly may further comprise a mounting rail to which the base portion of the support rail is coupled. The assembly may further comprise a bracket for mounting the support rail to the mounting rail.

By optimizing the shape of the support rail supporting a photoelectric panel by being mounted on a rear surface of the photoelectric panel, a stress concentration locally applied to the photoelectric panel may be blocked and the photoelectric panel may be prevented from being damaged by using the support rail.

Since a support rail is formed by bending sheet metal, the support rail is easily manufactured without having to perform a special process, such as extrusion moulding, to form a complex cross-sectional structure, and is manufactured at a relatively low cost.

Embodiments of the invention will now be described by way of example with reference to the accompanying drawings, in which:
FIG. 1 is an exploded perspective view of a photoelectric panel assembly;
FIG. 2 is a view showing an arrangement of a support rail in the photoelectric panel assembly of FIG. 1;
FIG. 3 is a view showing coupling between a photoelectric panel and the support rail in the photoelectric panel assembly of FIG. 1;
FIG. 4 is a perspective view of the support rail of FIG. 1;
FIG. 5 is a cross-sectional view taken along a line V-V of FIG. 4;
FIGS. 6 and 7 are views showing various shapes of the support rail according to a bending angle of the support rail;
FIG. 8 is a graph showing a safety factor according to a bending angle of the support rail;
FIG. 9 is a view showing a cross-sectional shape of a support rail, indicating how to calculate the safety factor by varying the value of the bending angle and radius of curvature as shown in FIGS. 8, 11 and 12;
FIG. 10 is a view showing a cross-sectional shape of a support rail, according to another embodiment of the present invention;
FIG. 11 is a graph showing a safety factor of the support rail according to a radius of curvature of a round portion;
FIG. 12 is a graph showing a safety factor of the support rail according to a ratio of radius of curvature and length;
FIG. 13 is a further view showing a cross-sectional shape of a support rail, indicating how to calculate the safety factor by varying the value of the bending angle and radius of curvature as shown in FIGS. 8, 11 and 12;
FIG. 14 is a view for describing a case when a sheet metal is excessively bent while forming a support rail;
FIG. 15A is a view showing a cross-sectional shape of a support rail according to a comparative example;
FIG. 15B is a view showing a deformed state of the support rail of FIG. 15A; and
FIG. 16 is a view showing a deformed state of a support rail, according to an embodiment of the present invention.

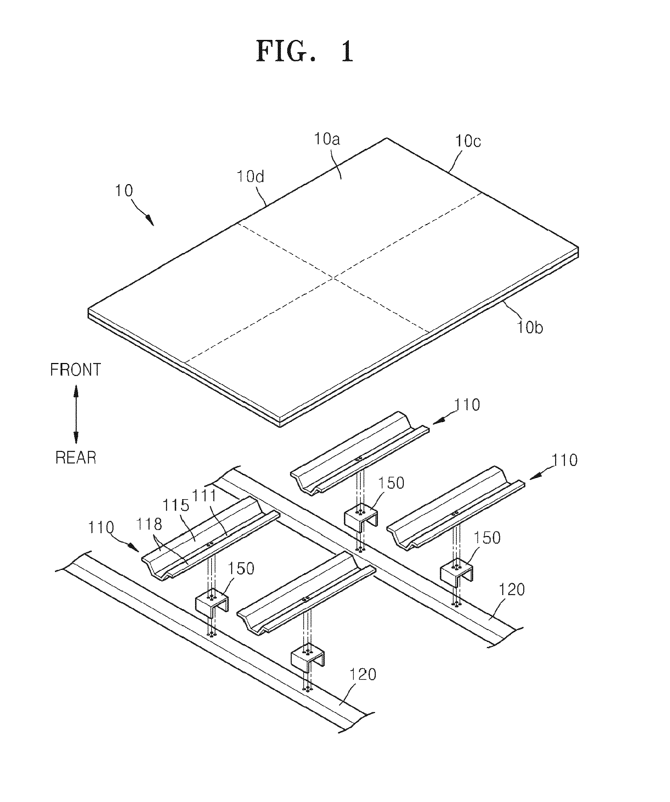

Referring to FIGS. 1 to 3, the photoelectric panel assembly includes the photoelectric panel 10 and the support rail 110 for supporting the photoelectric panel 10.

The photoelectric panel 10 may perform photoelectric transformation to output electric energy by using incident light from a sun as an input. For example, the photoelectric panel 10 may include a solar cell module including a plurality of photoelectric cells (not shown).

Herein, a front surface 10a and a rear surface 10b of the photoelectric panel 10 may respectively be a light-receiving surface and a non-light-receiving surface of the photoelectric panel 10. For example, the front surface 10a of the photoelectric panel 10 may form a light-receiving surface for receiving the incident light from the sun, and the rear surface 10b of the photoelectric panel 10 may form a non-light-receiving surface opposite to the light-receiving surface. For example, the photoelectric panel 10 may be tilted from a horizontal surface of the ground at a predetermined angle so as to receive a maximum amount of solar radiation from the sun.

The photoelectric panel 10 may have an overall rectangular flat panel shape. In detail, the photoelectric panel 10 may have a rectangular shape having a pair of long sides 10d and a pair of short sides 10c.

The support rail 110 may be assembled at the rear surface 10b of the photoelectric panel 10. The support rail 110 may support the rear surface 10b of the photoelectric panel 10. The support rail 110 may provide structural rigidity by being coupled to the rear surface 10b of the photoelectric panel 10. For example, the support rail 110 may provide a structure for fixing the photoelectric panel 10 on a mount rail 120 supporting the photoelectric panel 10.

For example, the support rail 110 may be fixed on the mount panel 120 through a base portion 111. For example, the support rail 110 may be fixed on the mount rail 120 through a bracket 150 provided on a rear surface of the base portion 111.

The support rail 110 may be formed of a steel material, such as galvanized steel, or a nonferrous metal material, such as aluminum or zinc. However, a material of the support rail 110 is not limited thereto, and may be any one of various metal materials or a polymer material, such as plastic.

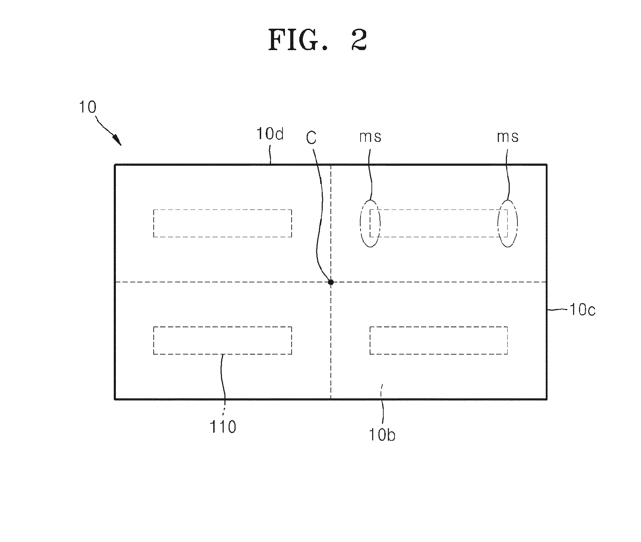

The support rail 110 may be a slender member extending along one direction. A plurality of the support rails 110 may be arranged at the rear surface 10b of the photoelectric panel 10. For example, as shown in FIG. 2, the support rails 110 may extend in parallel to the long sides 10d of the photoelectric panel 10, and be spaced apart from each other at top, bottom, left, and right locations at the rear surface 10b of the photoelectric panel 10. The support rails 110 may be disposed at the top, bottom, left, and right locations that are symmetrical such that a weight of the photoelectric panel 10 is approximately uniformly distributed. For example, the four support rails 110 may be disposed at symmetrical locations based on a center C of the photoelectric panel 10, and may be balanced so that a stress is not concentrated to one support rail 110. In the current embodiment, the number of support rails 110 is four, and the support rails 110 are disposed at regular intervals.

The support rail 110 may provide structural rigidity sufficient to stably support the photoelectric panel 10. The support rail 110 supports the weight of the photoelectric panel 10, and may support the weight of the photoelectric panel 10 at a location tilted with respect to the horizontal surface of the ground. Shapes and locations of the support rails 110 may be determined by considering not only the weight of the photoelectric panel 10, but also a mechanical stress applied to the photoelectric panel 10 by an environment, such as wind, heat, snow, or rain.

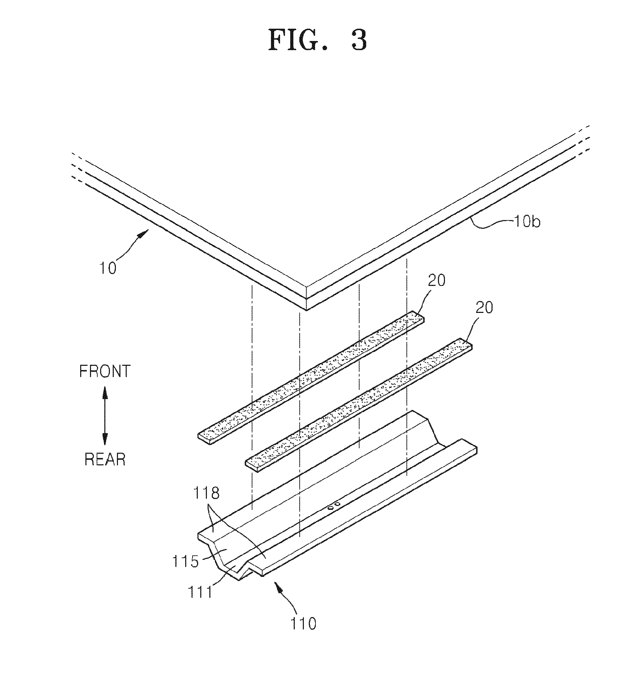

As shown in FIG. 3, the support rail 110 may be coupled to the rear surface 10b of the photoelectric panel 10 through an adhesion layer 20 disposed between the support rail 110 and the rear surface 10b of the photoelectric panel 10. In detail, a flange portion 118 of the support rail 110 may be adhered to the rear surface 10b of the photoelectric panel 10 via the adhesion layer 20, such as a double-sided tape or a bonding sealant.

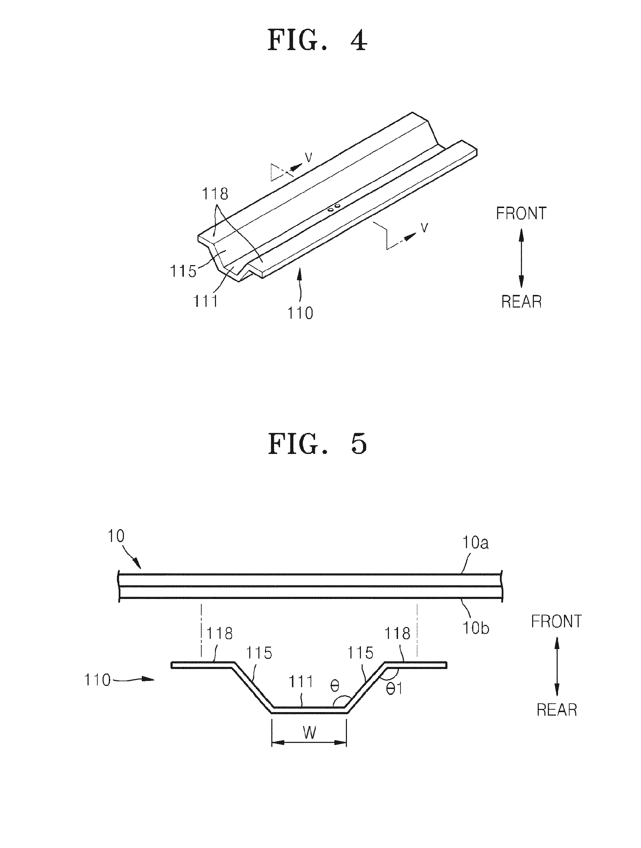

Referring to FIGS. 4 and 5, a cross-sectional shape of the support rail 110 may have a concave groove to have suitable rigidity with respect to bending moment. However, the cross-sectional shape of the support rail 110 is not limited to FIG. 5, and the support rail 110 may be variously deformed whether to be suppressed from being bent, or for convenient installation.

The support rail 110 may have the flange portion 118 bent to face and align with the photoelectric panel 10. The flange portion 118 may surface-contact the rear surface 10b of the photoelectric panel 10, and support the photoelectric panel 10 in a wide area. For example, the flange portion 118 may be formed at the rear surface 10b of the photoelectric panel 10. An adhesion between the support rail 110 and the photoelectric panel 10 may be mediated by disposing the adhesion layer 20 of FIG. 3 between the flange portion 118 and the photoelectric panel 10.

In detail, the support rail 110 may include the base portion 111 at the center, the flange portion 118 protruding towards the photoelectric panel 10 at two sides of the base portion 111, and a slope portion 115, also referred to as a joining portion, inclined to connect front and rear stepped portions between the base portion 111 and the flange portion 118 between the base portion 111 and the flange portion 118.

For example, the base portion 111 and the flange portion 118 may extend in parallel to each other, wherein the base portion 111 is formed at the rear towards the mount rail 120 of FIG. 1 and the flange portion 118 is formed at the front towards the photoelectric panel 10. The support rail 110 may be fixed on the mount rail 120 through the base portion 111, and coupled to the rear surface 10b of the photoelectric panel 10 through the flange portion 118.

For example, the base portion 111 and the flange portion 118 are respectively disposed at the rear and front towards the mount rail 120 and the photoelectric panel 10, and the slope portion 115 may be disposed between the base portion 111 and the flange portion 118 to mutually connect them. For example, the slope portion 115 may have an inclined shape to connect the front and rear stepped portions between the base portion 111 and the flange portion 1118. In other words, the base portion 111 and the flange portion 118 are disposed in parallel to face the photoelectric panel 10, and the slope portion 115 may extend in a diagonal direction of the photoelectric panel 10.

Referring to FIG. 5, the base portion 111 and the slope portion 115 may contact each other while having a bending angle θ. The bending angle θ between the base portion 111 and the slope portion 115 is an important design variable in designing the shape of the support rail 110.

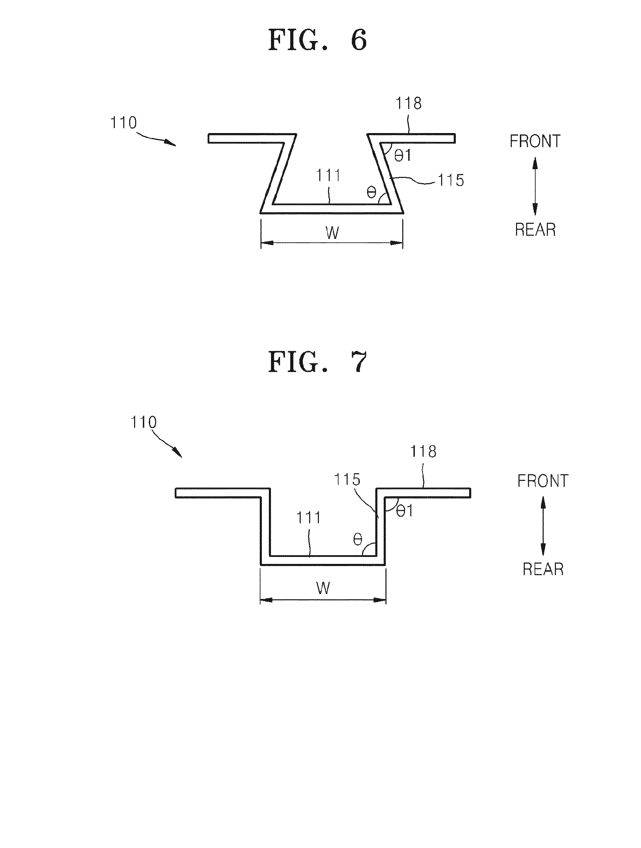

For example, the support rail 110 may have different shapes as shown in FIGS. 5 to 7 according to the bending angle θ of the support rail 110. In other words, according to the bending angle θ of the support rail 110, the slope portion 115 may extend outward than a width W of the base portion 111 (FIG. 5), extend inward than the width W of the base portion 111 (FIG. 6), or extend along the width W of the base portion 111 (FIG. 7). In FIG. 5, the bending angle θ is larger than 90° and in FIG. 6, the bending angle θ is smaller than 90°. Also, in FIG. 7, the bending angle θ is 90°.

The bending angle θ of the support rail 110 may be variously designed in order to distribute a stress caused by not only the weight of the photoelectric panel 10, but also a wind load or a snow load applied to the photoelectric panel 10 by an environment, such as wind, snow, or rain, and to prevent the support rail 110 from being damaged by stress concentration.

The bending angle θ of the support rail 110 may define an angle θ between the base portion 111 and the slope portion 115, while defining an angle θ₁ between the slope portion 115 and the flange portion 118. For example, as shown in FIGS. 5 through 7, the base portion 111 and the flange portion 118 may extend parallel to each other, and the base portion 111 and the flange portion 118 may contact the slope portion 115 in the same bending angle (θ=θ₁).

Hereinafter, the bending angle θ of the support rail 110 may simultaneously denote the angle θ between the base portion 111 and the slope portion 115, and the angle θ₁ between the slope portion 115 and the flange portion 118.

As shown in FIGS. 5 to 7, various embodiments may exist according to the bending angle θ, and the support rail 110 according to such various embodiments may be formed by bending a sheet metal. In other words, according to various embodiments, a bending portion exists between the base portion 111 and the slope portion 115 and between the slope portion 115 and the flange portion 118, and by simply bending the sheet metal having a plate shape, the support rail 110 having any shape shown in FIGS. 5 to 7 may be formed. Herein, the bending of the sheet metal means that the support rail 110 is obtained by bending the sheet metal having a plate shape a plurality of times, and a special process, such as extrusion moulding, is not required to obtain a complex cross-sectional shape.

For example, according to various embodiments of the present invention, the base portion 111, the slope portion 115, and the flange portion 118 of the support rail 110 are connected to each other such that an end of one portion is connected to an end of another portion. For example, the base portion 111, the slope portion 115, and the flange portion 118 of the support rail 110 are connected in the stated order, wherein one end of the base portion 111 and one end of the slope portion 115 are connected to each other, and the other end of the slope portion 115 and one end of the flange portion 118 are connected to each other. As such, the support rail 110 may be a single layer, for example, a single sheet metal layer, as the base portion 111, the slope portion 115, and the flange portion 118 are connected to each other.

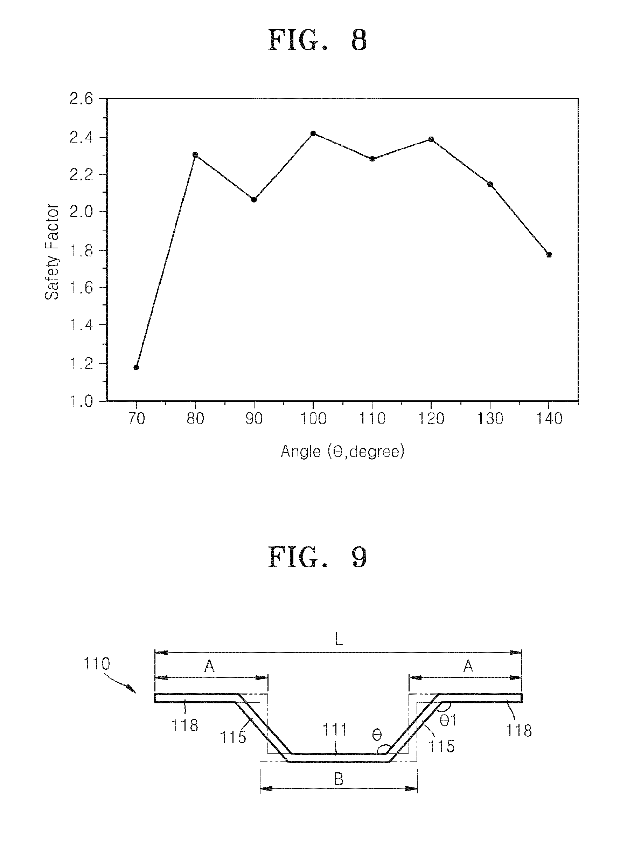

FIG. 8 is a graph showing a safety factor according to the bending angle θ of the support rail 110. In FIG. 8, results of calculating safety factors while variously changing the bending angle θ of the support rail 110 from 70° to 140° are shown. Here, the safety factors are calculated assuming a snow load applying a uniform pressure of 5400 Pa on a surface of the photoelectric panel 10.

A safety factor is related to a breaking strength of a substrate glass forming the photoelectric panel 10, and is a value in which the substrate glass is expected not to break and thus denotes a safety margin for preventing breaking. A design standard for the safety factor may vary, but it is assumed that a sufficient safety factor is obtained when the safety factor is equal to or higher than 2.0.

For reference, since the substrate glass of the photoelectric panel 10 is weaker than the support rail 110 to a shock or an external force, the support rail 110 may be designed based on the safety factor of the photoelectric panel 10.

As shown in FIG. 8, when the bending angle θ of the support rail 110 is between 80° and 130°, the safety factor equal to or higher than 2.0 may be obtained. In other words, the safety factor is remarkably low when the bending angle θ is lower than 80°, and the safety factor is also remarkably low when the bending angle θ is higher than 130°. For example, when the bending angle θ of the support rail 110 is lower than 80° or higher than 130°, a distance between the front and the back occupied by a cross section of the support rail 110 is decreased, and thus inertia moment is decreased. Accordingly, for example, a resistance characteristic with respect to bending during a snow load of about 5400 Pa may be weakened. In other words, referring to FIG. 6, when the bending angle θ is lower than 80°, the distance between the front and back occupied by the cross section of the support rail 110 is decreased. Also, referring to FIG. 5, even when the bending angle θ is higher than 130°, the distance between the front and back occupied by the cross section of the support rail 110 is decreased.

Referring to FIG. 8, a highest safety factor is obtained when the bending angle θ of the support rail 110 is 100°, i.e., high safety factors are obtained when the bending angle θ is from about 95° to about 105°. As a result, the bending angle θ may be set to 80° ≤ θ ≤ 130°, and in detail, 95° ≤ θ ≤ 105°. Here, by obtaining the sufficient safety factor, the support rail 110 may be prevented from breaking despite the weight of the photoelectric panel 10, and the snow load or wind load resulting from the environment.

For reference, in FIG. 8, the safety factor is calculated by variously changing the bending angle θ while maintaining the overall width (length L) of the support railto be the same, so that the length of the flange portion and the length of the base portion are changed. Accordingly, an overall weight of the support rail 110 is changed according to the change of the bending angle θ. In the current embodiment, a computation analysis is performed as described above in order to calculate the safety factor according to the change of the bending angle θ while uniformly maintaining the support condition (a support area) of the photoelectric panel 10.

FIG. 9 is a view showing a cross-sectional shape of a support rail, indicating how to calculate the safety factor by varying the value of the bending angle and radius of curvature as shown in FIGS. 8, 11 and 12.

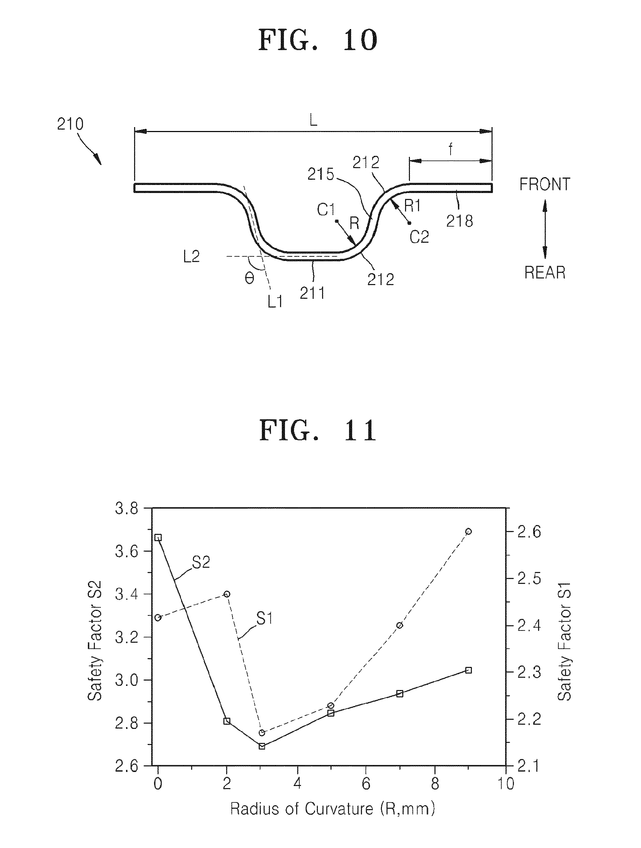

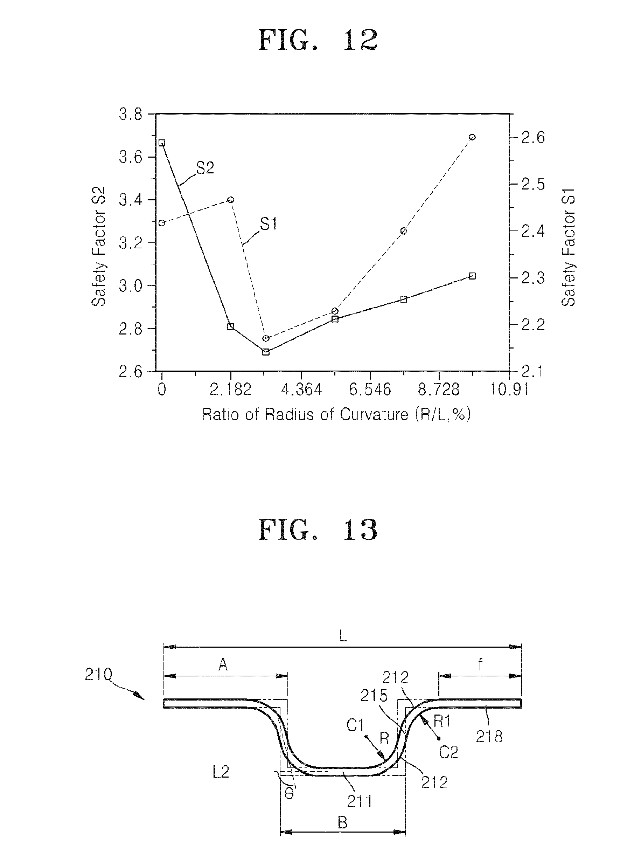

Referring to Figure 9, the base portion 111 and the flange portion 118 are connected to the joining portion 115 where the joining portion 115 meets the base portion 111 and the flange portion 118 respectively. Initially the meeting angle might be 90° in a starting state, before varying the value of the bending angle and radius of curvature to calculate the safety factor. From the starting state, the joining portion starts to have a slanted position, while the length of the support rail maintains a fixed value such as 91.6576mm. In other words, for the same overall length L of the support rail, the base portion and flange lengths become shorter with increase in the bending angle, as explained in more detail with reference to Figures 11 and 13 below.

FIG. 10 is a view showing a cross-sectional shape of a support rail 210, according to another embodiment of the present invention. Referring to FIG. 10, the support rail 210 includes a base portion 211, a flange portion 218 protruding forward at two sides of the base portion 211, and a slope portion 215 inclining to connect a stepped portion between the base portion 211 and the flange portion 218. In the current embodiment, a round portion 212 is formed on a boundary between the base portion 211 and the slope portion 215 and on a boundary between the slope portion 215 and the flange portion 218. For example, the round portion 212 smoothly connects sharp corners forming a singular point so as to prevent stress concentration and a negligent accident caused by carelessness.

A roundness degree of the round portion 212 may be determined based on radii of curvature R and R1 from centers of curvature C1 and C2, and the radii of curvature R and R1 of the round portion 212 may provide a design variable of the support rail 210.

The round portion 212 may be formed on at least any one of a corner between the base portion 211 and the slope portion 215, and a corner between the slope portion 215 and the flange portion 218. For example, referring to FIG. 10, the round portion 212 may be formed on both of the corners between the base portion 211 and the slope portion 215 and between the slope portion 215 and the flange portion 218 while having different centers of curvatures C1 and C2 and different radii of curvatures R and R1.

However, in FIG. 10, the round portions 212 having the same shape, i.e., the same centers of curvatures C1 and C2 and the same radii of curvatures R and R1 may be formed on the corners between the base portion 211 and the slope portion 215 and between the slope portion 215 and the flange portion 218. The round portions 212 having the same shape may be formed to promote process convenience.

For reference, hereinafter, the radius of curvature R of the round portion 212 may denote the radius of curvature R of the round portion 212 between the base portion 211 and the slope portion 215 or the radius of curvature R1 of the round portion 212 between the slope portion 215 and the flange portion 218.

Meanwhile, in FIG. 10, the base portion 211 and the slope portion 215 contact each other at the bending angle θ, and at this time, the bending angle θ may be defined to be an angle formed by an extending line L2 of the base portion 211 and an extending line L1 of the slope portion 215. Since the bending angle θ has been described above, details thereof are not repeated here.

FIG. 11 is a graph showing a safety factor of the support rail 210 according to the radius of curvature R of the round portion 212. Referring to FIG. 10, the safety factor is calculated by variously changing the radius of curvature R of the round portion 212 from o mm to 9 mm while maintaining the bending angle θ of the support rail 210 to 100°. In FIG. 10, the safety factor is calculated by assuming a snow load applying a uniform pressure of 5400 Pa to the surface of the photoelectric panel 10.

In FIG. 11, a safety factor S1 is related to a breaking strength of the substrate glass forming the photoelectric panel 10, and is a value in which the substrate glass is expected not to break and thus denotes a safety margin for preventing breaking. A design standard for a safety factor may vary, but it is assumed that a sufficient safety factor is obtained when a safety factor is equal to or higher than 2.0. Meanwhile, a safety factor S2 is related to a breaking strength of the support rail 110, and denotes a safety margin for preventing breaking.

The safety factors S1 and S2 may both provide design conditions of the support rail 110, but the support rail 110 may be designed based on the substrate glass that is relatively weaker than the support rail 110. In other words, the safety factor S1 may have priority over the safety factor S2, and hereinafter, when a safety factor is mentioned, the safety factor may denote the safety factor S1.

Referring to FIG. 11, when the radius of curvature R of the round portion 212 is 3 mm, the safety factors S1 and S2 are the lowest. Also, when the radius of curvature R increases or decreases from 3 mm, the safety factors S1 and S2 are increased. Accordingly, when the radius of curvature R is between 2.5 mm to 4 mm, the safety factors S1 and S2 are the lowest or close to the lowest, the radius of curvature R of the round portion 212 may be set to o mm < R ≤ 2.5 mm or 4 mm ≤ R ≤ 9 mm to avoid the above range. The safety factors S1 and S2 equal to or higher than 2.1 are obtained even when the radius of curvature R of the round portion 212 is 3 mm because the bending angle θ is set to 100° to obtain a highest safety factor (refer to FIG. 8). However, the radius of curvature R of the round portion 212 may be set to avoid about 3 mm to obtain a higher safety factor under the same condition.

Meanwhile, when the radius of curvature R is o mm, the round portion 212 is not formed. When the radius of curvature R is o mm, the safety factor S2 is maximum, but the safety factor S1 of the substrate glass that is relatively weak is not relatively high, and for example, the safety factor S1 tends to decrease as the radius of curvature R is decreased from 2 mm to o mm. Accordingly, the radius of curvature R may avoid o mm.

For reference, in FIG. 11, the safety factors S1 and S2 are calculated by variously changing the radius of curvature R while maintaining the overall length of the support rail. For example, in FIG. 11, the safety factors S1 and S2 are calculated by changing the radius of curvature R while maintaining the overall length (width) L of the support rail constant. That is, a width f of the flange portion 218 directly supporting the photoelectric panel 10, and a width of the base portion 211 are changed to allow the overall length L of the support rail to remain constant. Accordingly, an overall weight of the support rail 210 is changed according to the change of the radius of curvature R. In the current embodiment, a computation analysis is performed as described above in order to calculate the safety factors S1 and S2 according to the change of the radius of curvature R while uniformly maintaining the a support condition (a support area) of the photoelectric panel 10.

The weight of the support rail 210 according to the radius of curvature R is calculated according to Table 1 below. As shown in Table 1, when the radius of curvature R is o mm, the weight of the support rail 210 is heaviest. Considering structural rigidity and production costs of the photoelectric panel assembly, the radius of curvature R should avoid o mm.

**[Table 1]**

| *Radius of Curvature (mm)* | *Weight (kg) of Support Rail* |
|---|---|
| 9 | 0.400 |
| 7 | 0.408 |
| 5 | 0.416 |
| 3 | 0.424 |
| 2 | 0.428 |
| 0 | 0.440 |

FIG. 12 is a graph showing a safety factor of the support rail according to a ratio of radius of curvature and length.

Referring to FIG. 12, the horizontal axis indicates a normalized scale as a relative ratio of radius of curvature to length of support rail, expressed as a percentage. Here, the length of the support rail is a fixed value of 91.6576mm, which corresponds to the sum of the length of the base portion and both flange portions (L= B+2A). In this case, the length B of the base portion is a fixed value 30mm and the length of each of the flange portions A is a fixed value of 30.8288mm.

In FIG. 12, the claimed range of 0mm < R ≤ 2.5mm or 4mm ≤ R ≤ 9mm translates to a range o < R/L ≤ 2.728% or 4.364% ≤ R/L ≤ 9.819%, where L is the fixed value of 91.6576mm. It would be understood that the R/L ratios hold for various L depending on the panel size.

Referring to FIGS. 11 and 12, the upper limit of the range (R=9mm, R/L =9.819%, for a given L) is set considering the shrinkage of the length (f) of the flange portion resulting from the variation of the radius of curvature while maintaining the overall length of the support rail constant. If the upper limit is exceeded, the flange portion becomes too short to support the photoelectric panel in a stable manner. In addition, the width of the base portion also becomes too short so as to limit the coupling area of the base portion, which may result in weak coupling between the base portion and the photoelectric panel.

FIG. 13 is a further view showing a cross-sectional shape of a support rail, indicating how to calculate the safety factor by varying the value of the bending angle and radius of curvature as shown in FIGS. 8, 11 and 12. In this example, the base portion 211 and the flange portion 218 are connected to the joining portion 215 where the joining portion 215 meets the base portion 211 and flange portion 218, as in the example shown in FIG. 9. The dotted lines show the original state before varying the value of the bending angle and radius of curvature. The figure clearly illustrates the shortening in the length of the flange portion f and the base portion B with increase in the bending angle θ.

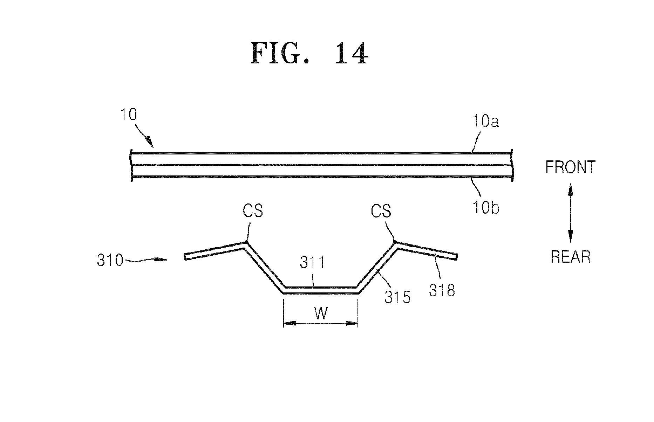

FIG. 14 is a view for describing a case when a sheet metal is excessively bent while forming a support rail 310. As shown in FIG. 11, when the support rail 310 is formed by bending the sheet metal, the sheet metal may be excessively bent. Also, when the radius of curvature is o mm, i.e., when a round portion is not formed, a sharp corner CS may be formed between a base portion 311 and a slope portion 315 or between a slope portion 315 and a flange portion 318, and at this time, a stress may be concentrated on the photoelectric panel 10. Accordingly, the radius of curvature R may be set to 0 mm < R ≤ 2.5 mm or 4 mm ≤ R ≤ 9 mm, excluding o mm.

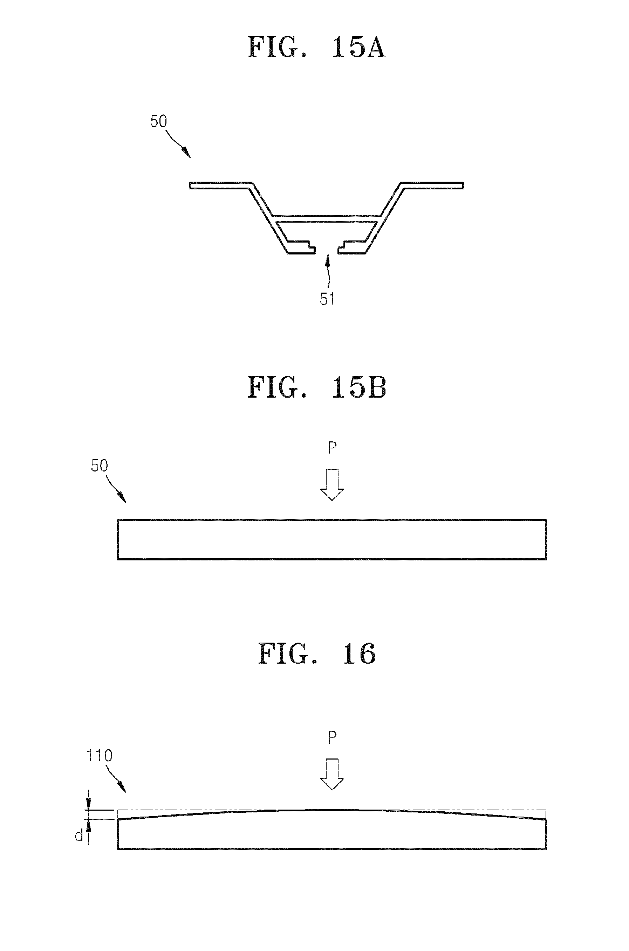

FIGS. 15A and 15B are views showing a support rail 50 according to a comparative example. In detail, FIG. 15A is a view showing a cross-sectional shape of the support rail 50 and FIG. 15B is a view showing a side shape of the support rail 50.
Referring to FIG. 15A, a base portion 51 of the support rail 50 may have a double structure. Rigidity of the support rail 50 may be strengthened via the base portion 51 having the double structure, but the support rail 50 that barely bends to have a flat structure may cause a strong contact pressure with respect to the photoelectric panel 10.

FIGS. 15B and 16 are views showing deformed states of the support rail 50 and 110, respectively according to the comparative example and to an embodiment of the present invention.

As shown in FIG. 15B, the support rail 50 according to the comparative example barely bends despite of the weight of the photoelectric panel 10, and maintains an approximately flat shape. In this case, the photoelectric panel 10 bends due to its weight and contacts ends of the support rail 50, and thus a strong contact pressure is applied to some of the photoelectric panel 10. As a result, the photoelectric panel 10 may be damaged if only the rigidity of the support rail 50 is considered.

As shown in FIG. 16, the support rail 110 according to the embodiment of the present invention elastically bends due to the weight of the photoelectric panel 10 by a bending amount d, and a contact pressure applied to the photoelectric panel 10, i.e., a contact pressure applied to the photoelectric panel 10 when end portions of the support rail 110 contact the photoelectric panel 10, is remarkably low compared to that of the comparative example. Accordingly, by elastically deforming the support rail 110, the photoelectric panel 10 may be prevented from being damaged due to the contact pressure of the support rail 110.

For reference, referring to FIG. 2, when the end portions of the support rail 110 pressurize and contact the rear surface 10b of the photoelectric panel 10, maximum stress regions ms are formed in the rear surface 10b of the photoelectric panel 10. In the current embodiment, by elastically deforming the support rail 110, the photoelectric panel 10 may be prevented from being damaged due to the contact pressure of the support rail 110.

Meanwhile, as shown in FIG. 5, the support rail 110 may be formed by bending the sheet metal, and thus may be a single layer of the sheet metal in which the base portion 111, the slope portion 115, and the flange portion 118 are connected to each other. The support rail 110 is easily elastically deformed since it is formed in a single layer, and is easily formed by simply bending the sheet metal. However, according to the support rail 50 of FIG. 15A, the base portion 51 has the double structure, and the support rail 50 is difficult to be formed via a simple process, for example, by bending a sheet metal, but is formed via a complex process, such as extrusion moulding.

In detail, based on the cross-sectional shape of the support rail 50 of FIG. 15A, it is determined that it is difficult to form the support rail 50 via simple bending but is formed via extrusion moulding. For example, when the support rail 50 is divided into three portions, the support rail 50 is not a single layer in which an end of a portion is connected to an end of another portion, and the base portion 51 has the double structure. Such a shape of the support rail 50 is not formed by simply bending a sheet metal, but is formed via a high price moulding process, such as extrusion moulding.

It should be understood that the exemplary embodiments described herein should be considered in a descriptive sense only and not for purposes of limitation. Descriptions of features or aspects within each embodiment should typically be considered as available for other similar features or aspects in other embodiments.

## Claims

1. A photoelectric panel assembly comprising:
a photoelectric panel having a front surface for receiving light, and a rear surface opposite the front surface; and
a support rail coupled to the rear surface of the photoelectric panel, wherein the support rail includes a base portion, first and second flange portions on either side of the base portion coupled to the rear surface of the photoelectric panel and respective joining portions formed between the base portion and each of the flange portions, wherein the angle θ between the base portion and each of the joining portions is between 80° and 130°,
wherein at least one of the corner between the base portion and one of the joining portions and a corner between one of the joining portions and the corresponding flange portion are rounded.

2. The assembly according to claim 1, wherein the rounded portion has a radius of curvature R greater than o mm and less than or equal to 2.5 mm or between 4 mm and 9 mm.

3. The assembly according to claim 1 or 2, wherein the ratio of the radius of curvature R of the rounded portion to the length L of the support rail is in the range o < R/L ≤ 2.728% or 4.364% ≤ R/L ≤ 9.819%.

4. The assembly according to any one of the preceding claims, wherein each of the joining portions slopes inwards from the base portion to the flange portions.

5. The assembly according to any one of claims 1 to 3, wherein each of the joining portions slopes outwards from the base portion to the flange portions.

6. The assembly according to claim 5, wherein the angle θ between the base portion and each of the joining portions is between 95° and 105°.

7. The assembly according to claim 1, wherein each of the joining portions joins the base portion at a right angle.

8. The assembly according to any one of the preceding claims, wherein the base portion and the flange portions are parallel to one another.

9. The assembly according to any one of the preceding claims, wherein the support rail comprises a single layer of sheet metal.

10. The assembly according to any one of the preceding claims, comprising a plurality of support rails extending along the length of the panel and spaced apart from one another.

11. The assembly according to claim 10, wherein the photoelectric panel is supported by four support rails symmetrically disposed around the centre of the photoelectric panel.

12. The assembly according to any one of the preceding claims, further comprising an adhesive layer between the flange portion and the rear surface of the photoelectric panel.

13. The assembly according to any one of the preceding claims, further comprising a mounting rail to which the base portion of the support rail is coupled.

14. The assembly according to any one of the preceding claims, further comprising a bracket for mounting the support rail to the mounting rail.
